Europäisches Patentamt

European Patent Office

Office européen des brevets

(11) Veröffentlichungsnummer: **0 490 235 A2**

# (12) EUROPÄISCHE PATENTANMELDUNG

(21) Anmeldenummer: **91120749.6**

(22) Anmeldetag: **03.12.91**

(51) Int. Cl.5: **F16C 23/04**

(30) Priorität: **11.12.90 DE 9016728 U**

(43) Veröffentlichungstag der Anmeldung:
**17.06.92 Patentblatt 92/25**

(84) Benannte Vertragsstaaten:
**DE FR SE**

(71) Anmelder: **Hanning Elektro-Werke GmbH & Co.**
**Holter Strasse 90**
**W-4811 Oerlinghausen(DE)**

(72) Erfinder: **Jäkel, Herbert, Dipl.-Ing.**
**Kiefernweg 27**
**W-4811 Oerlinghausen(DE)**

(74) Vertreter: **Hentzschel, Hans-Jürgen**
**In der Feldmark 3**
**W-4970 Bad Oeynhausen 1(DE)**

(54) **Als Kalottenlager ausgebildetes Gleitlager.**

(57) Die Erfindung betrifft ein als Kalottenlager ausgebildetes Gleitlager, insbesondere für die Rotorwelle (1) von Elektromotoren, das als Gleitlagersitz einen an seinem Umfang kugelförmigen oder balligen Lagerkörper (2) aufweist, der sich aus einem inneren zylindrisch gestalteten Lagerabschnitt (5) sowie einem damit verbundenen, den inneren Lagerabschnitt (5) ringförmig umgebenden, die kugelige bzw. ballige Umfangsfläche bildenden, eine nahezu gleiche Wandstärke besitzenden äußeren Lagerabschnitt (6) zusammensetzt und in eine den äußeren Lagerabschnitt (6) unter Vorspannung aufnehmende Halterung (3) eingesetzt ist. Damit die den Lagerkörper (2) aufnehmende Halterung (3) dieses Lagers in Einsparung eines zusätzlichen Bauteiles unmittelbar das Lagerschild sein kann, sind im äußeren Lagerabschnitt (6) jeweils zu dessen freier Kante (7) hin geöffnete, vornehmlich parallel zur Lagerachse (8) verlaufende Ausnehmungen (9) vorgesehen, so daß sich der Lagerkörper (2) mit geringstem Montageaufwand axial in die Halterung (3) hineindrücken läßt.

Fig. 2

Die Erfindung betrifft ein als Kalottenlager ausgebildetes Gleitlager, insbesondere für die Rotorwelle von Elektromotoren, das als Gleitlagersitz einen an seinem Umfang kugelförmigen oder balligen Lagerkörper aufweist, der sich aus einem inneren zylindrisch gestalteten Lagerabschnitt sowie einem damit verbundenen, den inneren Lagerabschnitt ringförmig umgebenden, die kugelige bzw. ballige Umfangsfläche bildenden, eine nahezu gleiche Wandstärke besitzenden äußeren Lagerabschnitt zusammensetzt und in eine den äußeren Lagerabschnitt unter Vorspannung aufnehmende Halterung eingesetzt ist.

Ein sich selbst einstellendes Kalottenlager dieser Art geht beispielsweise aus der EP-A 01 39 974 hervor. Der Lagerkörper des darin wiedergegebenen Kalottenlagers ist in der auch sonst allgemein üblichen Weise mit einer Klemmbrille oder Klemmfeder im Lagerschild gehalten. Ein solches Federelement stellt jedoch ein zusätzliches Bauteil dar, von dem außerdem die Montage erschwert wird.

Das zuvor Gesagte gilt ebenso für Kalottenlager, wie sie aus der US-PS 3 671 092 ersichtlich sind. Bei ihnen besteht die den Lagerkörper umfassende Halterung gleichfalls aus zwei Teilen, was wiederum eine aufwendige Montage bedingt.

Eine andere Lageranordnung wird von der US-PS 4 591 276 offenbart. Dort ist die für den kugelförmigen oder balligen Lagerkörper bestimmte Halterung mit Radialschlitzen versehen, so daß der Lagerkörper axial eingeschnappt werden kann. Eine derartige elastische Halterung muß allerdings aus einem dafür geeigneten Werkstoff und somit stets getrennt vom Lagerschild hergestellt sein. Die Folge davon ist abermals ein zusätzliches Bauteil mit entsprechenden Montagevorgängen.

Ausgehend vom erläuterten Stand der Technik hat sich die Erfindung die Aufgabe gestellt, ein Kalottenlager verfügbar zu machen, dessen den Lagerkörper aufnehmende Halterung einstückig ausgebildet ist und infolgedessen unmittelbar vom Lagerschild gebildet werden kann. Dadurch sollen sowohl Herstellungs- als auch Montagekosten eingespart werden.

Die Lösung der erfindungsgemäßen Aufgabe besteht darin, daß der die kugelige bzw. ballige Umfangsfläche bildende äußere Lagerabschnitt mit jeweils zu dessen freier Kante hin geöffneten, vornehmlich parallel zur Lagerachse verlaufenden Ausnehmungen versehen ist. Aufgrund dieser Ausnehmungen im äußeren Lagerabschnitt besitzt nun der nach einem weiteren Vorschlag der Erfindung zweckmäßigerweise aus thermoplastischem Kunststoff gefertigte Lagerkörper elastische Eigenschaften, woraufhin er sich zur Montage mit geringstmöglichem Aufwand in seine starr auszubildende Halterung, die demnach ohne weiteres das Lagerschild selbst sein kann, hineindrücken läßt.

Ein Ausführungsbeispiel des Anmeldungsgegenstandes wird nachfolgend anhand der Zeichnung beschrieben. Darin zeigen im einzelnen:

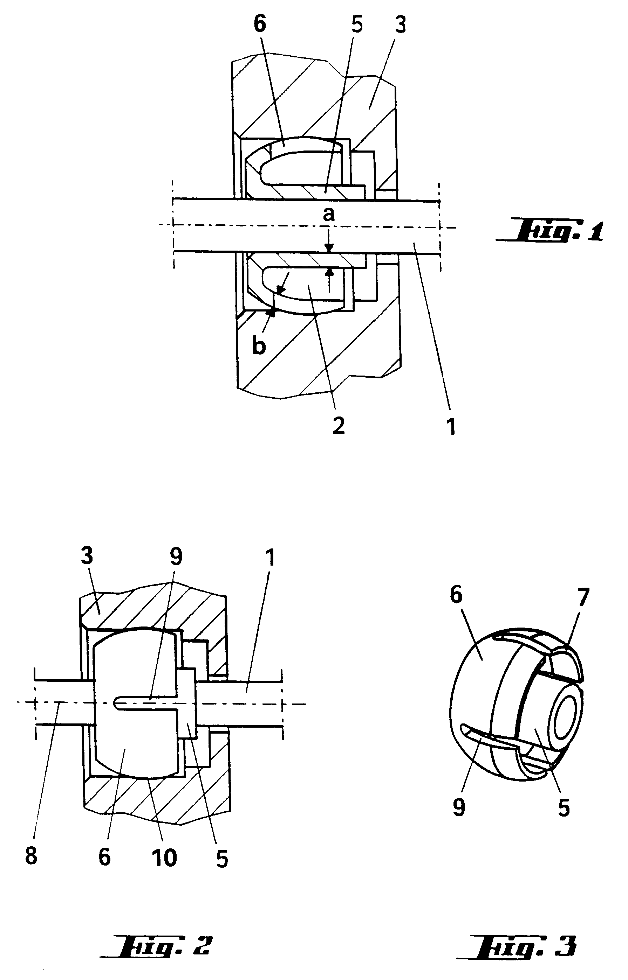

Fig. 1    den Axialschnitt eines die Erfindungsmerkmale aufweisenden Gleitlagers,

Fig. 2    den Axialschnitt aus Fig. 1, jedoch mit ungeschnitten dargestelltem Lagerkörper, und

Fig. 3    die perspektivische Einzeldarstellung des in den Fig. 1 und 2 enthaltenen Lagerkörpers.

Das für die Rotorwelle 1 eines Elektromotors bestimmte Kalottenlager besteht aus einem an seinem Umfang balligen Lagerkörper 2 und einer diesen aufnehmenden Halterung 3, die unmittelbar vom Motorlagerschild gebildet sein kann. Damit beim Fertigungsvorgang des aus thermoplastischem Kunststoff hergestellten Lagerkörpers 2 keine zu störenden Maßabweichungen führenden Materialschrumpfungen auftreten, setzt er sich aus einem zylindrisch geformten inneren Lagerabschnitt 5 und einem stirnseitig damit verbundenen, den inneren Lagerabschnitt 5 ringförmig umgebenden äußeren Lagerabschnitt 6 zusammen. Hierbei ist es für die genaue Einhaltung der geforderten Toleranzmaße außerdem wichtig, daß die beiden Lagerabschnitte 5 und 6 über nahezu gleiche Wandstärken a und b verfügen.

Um der erfindungsgemäßen Aufgabenstellung zufolge den Lagerkörper 2 ohne die Verwendung eines besonderen Klemmelementes in der Halterung 3 befestigen zu können, sind in dem die ballige Umfangsfläche des Lagerkörpers 2 ergebenden äußeren Lagerabschnitt 6 zu dessen freier Kante 7 hin geöffnete, parallel zur Lagerachse 8 verlaufende Ausnehmungen 9 vorgesehen. Durch diese im vorliegenden Fall mit jeweils 90° gegeneinander versetzt angeordneten Ausnehmungen 9 werden dem äußeren Lagerabschnitt 6 federnde Eigenschaften verliehen, aufgrund derer sich der Lagerkörper 2 nachgiebig in die mit einer Nut 10 versehene Halterung 3 axial eindrücken läßt. Anschließend vermag er sich darin genauso wie bei herkömmlichen Kalottenlagern der jeweiligen Stellung der Rotorwelle 1 entsprechend auszurichten.

**Patentansprüche**

1.    Als Kalottenlager ausgebildetes Gleitlager, insbesondere für die Rotorwelle (1) von Elektromotoren, das als Gleitlagersitz einen an seinem Umfang kugelförmigen oder balligen Lagerkörper (2) aufweist, der sich aus einem inneren zylindrisch gestalteten Lagerabschnitt (5) sowie einem damit verbundenen, den inneren Lagerabschnitt (5) ringförmig umgebenden, die kugelige bzw. ballige Umfangsfläche bildenden, eine nahezu gleiche Wandstärke besitzenden äußeren Lagerabschnitt (6) zusammensetzt und in eine den äußeren Lagerabschnitt (6) unter Vorspannung aufnehmende Halterung (3) eingesetzt ist,
dadurch gekennzeichnet, daß der die kugelige bzw. ballige Umfangsfläche bildende äußere Lagerabschnitt (6) mit jeweils zu dessen freier Kante (7) hin geöffneten, vornehmlich parallel zur Lagerachse (8) verlaufenden Ausnehmungen (9) versehen ist.

2. Gleitlager nach Anspruch 1, dadurch gekennzeichnet, daß der unter Vorspannung in die Halterung (3) eingesetzte Lagerkörper (2) aus thermoplastischem Kunststoff besteht.

Fig. 1

Fig. 2

Fig. 3